# EUROPEAN PATENT SPECIFICATION

(11) **EP 3 792 048 B1**
(45) Date of publication and mention of the grant of the patent: **24.05.2023**
(21) Application number: 19382799.5
(22) Date of filing: 16.09.2019
(51) Int. Cl.: B29D 30/00

(54) **HANDLING HEAD FOR RAW TYRE TREADS**
HANDHABUNGSKOPF FÜR ROHREIFENLAUFFLÄCHEN
TÊTE DE MANUTENTION POUR BANDES DE ROULEMENT D'ÉBAUCHE CRUE DE PNEUMATIQUE

(43) Date of publication of application: 17.03.2021
(73) Proprietor: Desmasa, S.L., 09001 Burgos (ES)
(72) Inventor: HERNÁNDO SÁIZ, Carlos, 09004 Burgos (ES)
(74) Representative: Pons Ariño, Angel

(56) References cited:
- EP-A2- 0 154 612
- JP-A- H0 834 021
- JP-A- H1 179 334

## Description

### OBJECT OF THE INVENTION

The present invention relates to a handling head for raw tyres which enables the handling of the raw tyre from a horizontal position to a vertical position to be performed, as well as the readjustment of the diameter and the ejection of the raw tyre to be stored or taken to a vulcanising station once said diameter has been readjusted.

### BACKGROUND OF THE INVENTION

In the tyre manufacturing industry, these are produced from a raw tyre made of rubber which exhibits an extensively plastic behaviour. For the material to become elastic, it needs to be vulcanised in a curing press. Given the weight of the raw tyre and the extensively plastic nature of the material from which it is made, the operations for handling the raw tyre prior to the vulcanising are particularly delicate.

To do so, machines are used which handle the raw tyre from a horizontal position to a vertical position and then introduce it into a robot that grasps it, readjusts the diameter and pushes it in order to store the same or for it to be taken to a vulcanising station once said diameter has been readjusted.

There are other machines intended to handle rigid tyres comprising fastening means which support the rigid tyre by the inner ring thereof, but which are not suitable for performing the handling of raw tyres since these would be deformed.

Document JPH1179334A discloses a reversing device that reverses a tire shaft of an unvulcanized tire after molding on a molding drum from a horizontal state to a vertical state.

The applicant does not know of any handling head for raw tyres that solves the aforementioned problems.

### DESCRIPTION OF THE INVENTION

The present invention relates to a handling head for raw tyres which enables the handling of the raw tyre from a horizontal position to a vertical position to be performed, as well as the readjustment of the diameter and the ejection of the raw tyre to be stored or taken to a vulcanising station once said diameter has been readjusted.

The handling head for raw tyres comprises:
- fastening means configured to fasten a raw tyre in an essentially horizontal position and in an essentially vertical position.

Optionally, the fastening means configured to fasten a raw tyre in an essentially horizontal position and in an essentially vertical position comprise a main support and at least one secondary support rotatably linked to the main support, wherein the at least one secondary support comprises at least one roller for fastening the raw tyre.

Optionally, the fastening means configured to fasten a raw tyre in an essentially horizontal position and in an essentially vertical position are at least partially collapsible.

Optionally, the handling head for raw tyres further comprises ejection means configured to remove the raw tyre from the handling head.

Optionally, the fastening means configured to fasten a raw tyre in an essentially horizontal position and in an essentially vertical position further comprise at least one support plate configured to act as support for the flank of the raw tyre.

In this manner, the head thus configured enables the combination of the handling tasks of the raw tyre from a horizontal position to a vertical position, as well as the readjustment of the diameter and the ejection of the raw tyre to be stored or taken to a vulcanising station once said diameter has been readjusted.

The invention also relates to a handling machine for raw tyres comprising:
- a chassis;
- at least one arm of a robot comprising a first connecting end to connect the arm of the robot to the chassis; and
- the handling head for raw tyres described above.

Optionally, the at least one arm of a robot comprises a second connecting end to connect to the handling head opposite from the first connecting end.

### BRIEF DESCRIPTION OF THE DRAWINGS

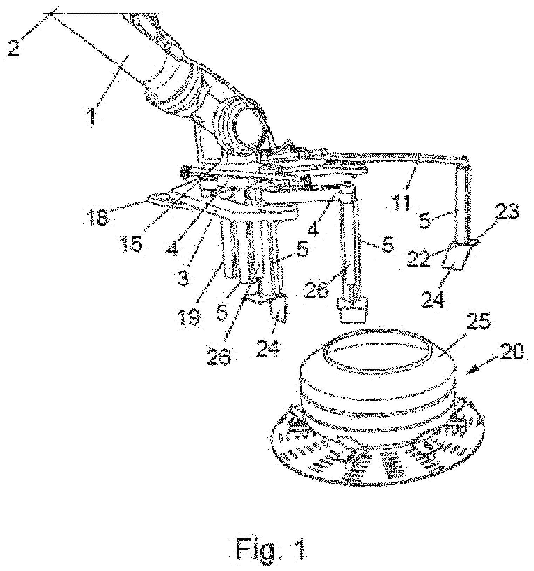

Figure 1 shows a perspective view of the handling head for raw tyres of the present invention prior to fastening the raw tyre in an essentially horizontal position.

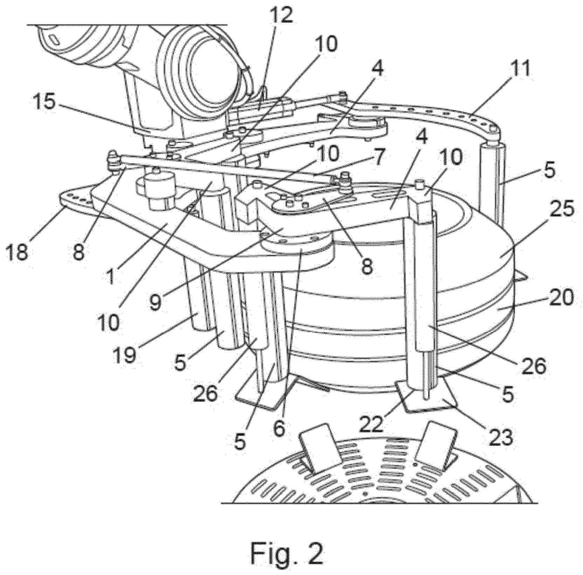

Figure 2 shows a perspective view of the handling head for raw tyres of the present invention wherein the raw tyre is fastened in an essentially horizontal position.

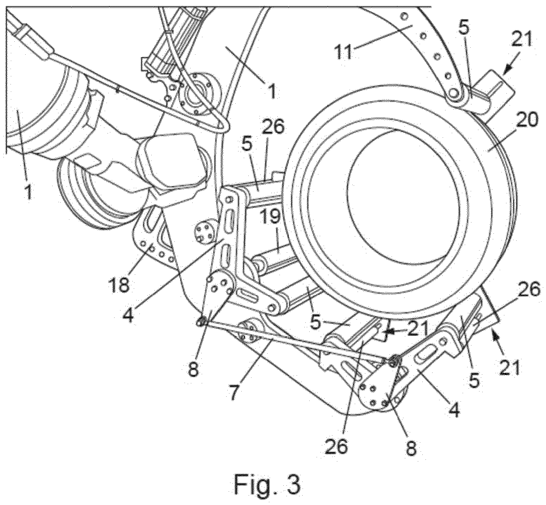

Figure 3 shows a perspective view of the handling head for raw tyres of the present invention wherein the raw tyre is fastened in an essentially vertical position.

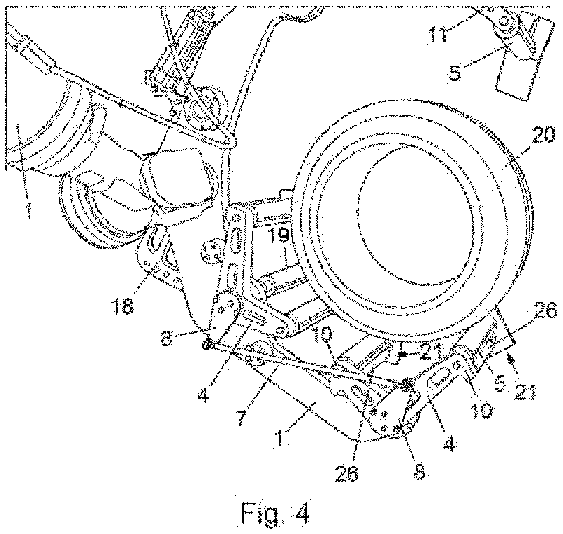

Figure 4 shows a perspective view of the handling head for raw tyres of the present invention wherein the fastening means configured to fasten a raw tyre in an essentially horizontal position and in an essentially vertical position are at least partially collapsed.

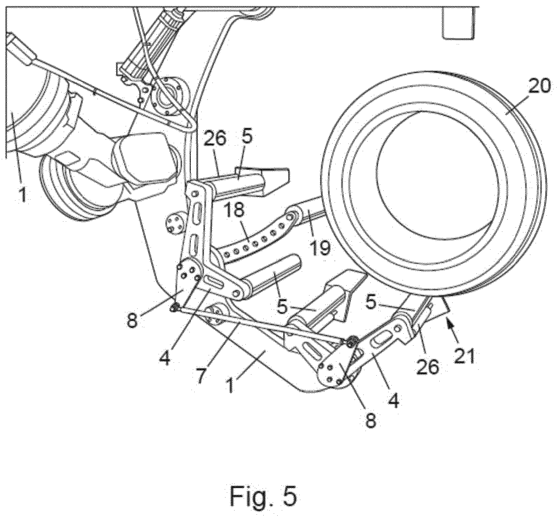

Figure 5 shows a perspective view of the handling head for raw tyres of the present invention wherein the ejection means configured to remove the raw tyre from the head acting on said tyre are shown.

### PREFERRED EMBODIMENT OF THE INVENTION

In a preferred embodiment of the invention, the handling head for raw tyres comprises:
- fastening means (3, 4, 5, 6, 7, 8, 9, 10, 11, 12, 21, 22, 23, 24) configured to fasten a raw tyre (20) in an essentially horizontal position and in an essentially vertical position.

The fastening means (3, 4, 5, 6, 7, 8, 9, 10, 11, 12, 21, 22, 23, 24) configured to fasten a raw tyre (20) in an essentially horizontal position and in an essentially vertical position comprise a main support (3) and two secondary supports (4) rotatably linked to the main support (3), wherein the secondary supports (4) comprise rollers (5) for fastening the raw tyre (20).

The secondary supports (4) are rotatably linked to the main support (3), preferably through at least one first actuator (6).

In this exemplary embodiment, the fastening means (3, 4, 5, 6, 7, 8, 9, 10, 11, 12, 21, 22, 23, 24) comprise tertiary supports (8) connected, preferably without the possibility of rotation, to the secondary supports (4) and a connecting rod (7) of the tertiary supports (8), thus configuring an articulated quadrilateral which links the movement of the two secondary supports (4).

The secondary supports (4) comprise a first connecting end (9) to connect to the main support (8) and a second connecting end (10) at which the rollers (5) for fastening the raw tyre (20) are connected.

In this preferred embodiment, the secondary supports (4) are L-shaped, wherein at each of the free ends of the L there is a fastening roller (5) fastened to fasten the raw tyre (20) and wherein each secondary support (4) is connected to the main support (3) at the intersection of the two branches of the L, which coincides with the first connecting end (9) to connect to the main support (8).

The fastening means (3, 4, 5, 6, 7, 8, 9, 10, 11, 12, 21, 22, 23, 24) configured to fasten a raw tyre (20) in an essentially horizontal position and in a essentially vertical position are at least partially collapsible. In this exemplary embodiment, the fastening means (3, 4, 5, 6, 7, 8, 9, 10, 11, 12, 21, 22, 23, 24) comprise a collapsible support (11) which is collapsible, preferably through a second actuator (12), from an open position to a closed position, in an essentially horizontal position, in order to perform the fastening of the raw tyre (20), and from the closed position to the open position, in an essentially vertical position, in order to perform the release of the raw tyre (20) once the necessary work has been performed thereon.

The handling head for raw tyres further comprises ejection means (18, 19) configured to remove the raw tyre (20) from the head, wherein these ejection means (18, 19) comprise a collapsible ejection arm (18) connected to an ejection roller (19), which act when the collapsible support (11) is in an essentially vertical position once the release of the raw tyre (20) has been performed.

The fastening means (3, 4, 5, 6, 7, 8, 9, 10, 11, 12, 21, 22, 23, 24) further comprise a support plate (21) configured to act as support for the flank (25) of the raw tyre (20).

Additionally, the head comprises pneumatic-type actuators (26), linked to the rollers (5), and configured to move the plates (21) from a first position wherein the second section (24) stays parallel to the shaft of the roller (5), to a second position wherein the second section (24) forms a certain angle to support the raw tyre (20) on the plate (21). In this way, the head descends axially in order to collect the raw tyre (20), the plates (21) being in the first position, and once the head is in a suitable position, the actuators (26) are activated, the second section (24) of the platens staying parallel to and supported on the flank (25) of the raw tyre (20).

Preferably, the support plate (21) comprises a first section (23) perpendicular to a shaft of the fastening roller (5) for fastening the raw tyre (20) followed by a second oblique section (24) configured to support the flank (25) of the raw tyre (20).

The at least one support plate (21) is arranged at one end (22) of at least one of the fastening rollers (5) for fastening the raw tyre (20), the end (22) opposite from the second connecting end (10) of the fastening rollers (5) for fastening the secondary supports (4) of the raw tyre (20).

The invention also relates to a handling machine for raw tyres comprising:
- a chassis;
- at least one arm of a robot (1) comprising a first connecting end (2) to connect the arm of the robot (1) to the chassis;
- the handling head for raw tyres described above.
   wherein, the at least one arm of a robot (1) comprises a second connecting end (15) to connect to the handling head opposite from the first connecting end (2).

## Claims

1. A handling head for raw tyres comprising:
• fastening means (3, 4, 5, 6, 7, 8, 9, 10, 11, 12, 21, 22, 23, 24) configured to fasten a raw tyre (20) in an essentially horizontal position and in an essentially vertical position and **characterised by** said fastening means being also configured to handle the raw tyre from a horizontal position to a vertical position.

2. The handling head for raw tyres according to claim 1 **characterised in that** the fastening means (3, 4, 5, 6, 7, 8, 9, 10, 11, 12, 21, 22, 23, 24) configured to fasten a raw tyre (20) in an essentially horizontal position and in an essentially vertical position comprise a main support (3) and at least one secondary support (4) rotatably linked to the main support (3), wherein the at least one secondary support (4) comprises at least one fastening roller (5) for fastening the raw tyre (20).

3. The handling head for raw tyres according to claim 2 **characterised in that** the fastening means (3, 4, 5, 6, 7, 8, 9, 10, 11, 12, 21, 22, 23, 24) configured to fasten a raw tyre (20) in an essentially horizontal position and in an essentially vertical position comprise a main support (3) and two secondary supports (4) rotatably linked to the main support (3), wherein the secondary supports (4) comprise fastening rollers (5) for fastening the raw tyre (20).

4. The handling head for raw tyres according to claim 3 **characterised in that** the secondary supports (4) are rotatably linked to the main support (3), preferably through at least one first actuator (6).

5. The handling head for raw tyres according to claim 4 **characterised in that** the fastening means (3, 4, 5, 6, 7, 8, 9, 10, 11, 12, 21, 22, 23, 24) comprise tertiary supports (8) connected, preferably without the possibility of rotation, to the secondary supports (4) and a connecting rod (7) of the tertiary supports (8), thus configuring an articulated quadrilateral which links the movement of the two secondary supports (4).

6. The handling head for raw tyres according to any of claims 2 to 5, **characterised in that** the secondary supports (4) comprise a first connecting end (9) to connect to the main support (8) and a second connecting end (10) at which the fastening rollers (5) for fastening the raw tyre (20) are connected.

7. The handling head for raw tyres according to any of claims 2 to 5 **characterised in that** the secondary supports (4) are L-shaped, wherein at each of the free ends of the L there is a fastening roller (5) fastened to fasten the raw tyre (20) and wherein each secondary support (4) is connected to the main support (3) at the intersection of the two branches of the L.

8. The handling head for raw tyres according to any of the preceding claims **characterised in that** the fastening means (3, 4, 5, 6, 7, 8, 9, 10, 11, 12, 21, 22, 23, 24) configured to fasten a raw tyre (20) in an essentially horizontal position and in an essentially vertical position are at least partially collapsible.

9. The handling head for raw tyres according to claim 8 **characterised in that** the fastening means (3, 4, 5, 6, 7, 8, 9, 10, 11, 12, 21, 22, 23, 24) comprise a collapsible support (11) which is collapsible, preferably through a second actuator (12), from an open position to a closed position, in the essentially horizontal position, and from the closed position to the open position, in the essentially vertical position.

10. The handling head for raw tyres according to any of the preceding claims, **characterised in that** it further comprises ejection means (18, 19) configured to remove the raw tyre (20) from the machine.

11. The handling head for raw tyres according to claim 8 **characterised in that** the ejection means (18, 19) comprise a collapsible ejection arm (18) connected to an ejection roller (19).

12. The handling head for raw tyres according to any of claims 1 to 11, **characterised in that** the fastening means (3, 4, 5, 6, 7, 8, 9, 10, 11, 12, 21, 22, 23, 24) configured to fasten a raw tyre (20) in an essentially horizontal position and in an essentially vertical position further comprise at least one support plate (21) configured to act as support for the flank (25) of the raw tyre (20).

13. The handling head for raw tyres according to claims 2 and 12 **characterised in that** the at least one support plate (21) comprises a first section (23) perpendicular to a shaft of the fastening roller (5) for fastening the raw tyre (20) followed by a second oblique section (24) configured to support the flank (25) of the raw tyre (20).

14. The handling head for raw tyres according to claim 13, **characterised in that** it further comprises actuators (26) configured to move the plates (21) from a first position wherein the second section (24) is parallel to the shaft of the roller (5), to a second position wherein the second section (24) forms a certain angle to support the raw tyre (20) on the plate (21).

15. A handling machine for raw tyres comprising:
• a chassis;
• at least one arm of a robot (1) comprising a first connecting end (2) to connect the arm of the robot (1) to the chassis;
• the handling head for raw tyres of any of the preceding claims.

16. The handling machine for raw tyres according to claim 14, **characterised in that** the at least one arm of a robot (1) comprises a second connecting end (15) to connect to the handling head opposite from the first connecting end (2).

## Patentansprüche

1. Handhabungskopf für Rohreifen, der Folgendes umfasst:
• Befestigungsmittel (3, 4, 5, 6, 7, 8, 9, 10, 11, 12, 21, 22, 23, 24), die dazu ausgelegt sind, einen Rohreifen (20) in einer im Wesentlichen horizontalen Position und in einer im Wesentlichen vertikalen Position zu befestigen, und **dadurch gekennzeichnet, dass** die Befestigungsmittel außerdem dazu ausgelegt sind, den Rohreifen von einer horizontalen Position in eine vertikale Position zu handhaben.

2. Handhabungskopf für Rohreifen nach Anspruch 1, **dadurch gekennzeichnet, dass** die Befestigungsmittel (3, 4, 5, 6, 7, 8, 9, 10, 11, 12, 21, 22, 23, 24), die dazu ausgelegt sind, einen Rohreifen (20) in einer im Wesentlichen horizontalen Position und in einer im Wesentlichen vertikalen Position zu befestigen, eine Hauptstütze (3) und mindestens eine sekundäre Stütze (4), die drehbar an die Hauptstütze (3) gekoppelt ist, umfassen, wobei die mindestens eine sekundäre Stütze (4) mindestens eine Befestigungsrolle (5) zum Befestigen des Rohreifens (20) umfasst.

3. Handhabungskopf für Rohreifen nach Anspruch 2, **dadurch gekennzeichnet, dass** die Befestigungsmittel (3, 4, 5, 6, 7, 8, 9, 10, 11, 12, 21, 22, 23, 24), die dazu ausgelegt sind, einen Rohreifen (20) in einer im Wesentlichen horizontalen Position und in einer im Wesentlichen vertikalen Position zu befestigen, eine Hauptstütze (3) und zwei sekundäre Stützen (4), die drehbar an die Hauptstütze (3) gekoppelt sind, umfassen, wobei die zwei sekundären Stützen (4) Befestigungsrollen (5) zum Befestigen des Rohreifens (20) umfassen.

4. Handhabungskopf für Rohreifen nach Anspruch 3, **dadurch gekennzeichnet, dass** die sekundären Stützen (4) drehbar an die Hauptstütze (3) gekoppelt sind, vorzugsweise über mindestens einen ersten Aktuator (6).

5. Handhabungskopf für Rohreifen nach Anspruch 4, **dadurch gekennzeichnet, dass** die Befestigungsmittel (3, 4, 5, 6, 7, 8, 9, 10, 11, 12, 21, 22, 23, 24) tertiäre Stützen (8) umfassen, die, vorzugsweise ohne die Möglichkeit der Drehung, mit den sekundären Stützen (4) und einer Verbindungsstange (7) der tertiären Stützen (8) verbunden sind, wodurch ein angelenktes Viereck ausgelegt wird, das die Bewegung der zwei sekundären Stützen (4) koppelt.

6. Handhabungskopf für Rohreifen nach einem der Ansprüche 2 bis 5, **dadurch gekennzeichnet, dass** die sekundären Stützen (4) ein erstes Verbindungsende (9) zum Verbinden mit der Hauptstütze (8) und ein zweites Verbindungsende (10), mit dem die Befestigungsrollen (5) zum Befestigen des Rohreifens (20) verbunden sind, umfassen.

7. Handhabungskopf für Rohreifen nach einem der Ansprüche 2 bis 5, **dadurch gekennzeichnet, dass** die sekundären Stützen (4) L-förmig sind, wobei sich an jedem der freien Enden des Leine Befestigungsrolle (5) befindet, die zum Befestigen des Rohreifens (20) befestigt ist, und wobei jede sekundäre Stütze (4) am Schnittpunkt der beiden Schenkel des L mit der Hauptstütze (3) verbunden ist.

8. Handhabungskopf für Rohreifen nach einem der vorhergehenden Ansprüche, **dadurch gekennzeichnet, dass** die Befestigungsmittel (3, 4, 5, 6, 7, 8, 9, 10, 11, 12, 21, 22, 23, 24), die dazu ausgelegt sind, einen Rohreifen (20) in einer im Wesentlichen horizontalen Position und in einer im Wesentlichen vertikalen Position zu befestigen, mindestens teilweise klappbar sind.

9. Handhabungskopf für Rohreifen nach Anspruch 8, **dadurch gekennzeichnet, dass** die Befestigungsmittel (3, 4, 5, 6, 7, 8, 9, 10, 11, 12, 21, 22, 23, 24) eine klappbare Stütze (11) umfassen, die, vorzugsweise über einen zweiten Aktuator (12), in der im Wesentlichen horizontalen Position aus einer geöffneten Position in eine geschlossene Position und in der im Wesentlichen vertikalen Position aus der geschlossenen Position in die geöffnete Position klappbar ist.

10. Handhabungskopf für Rohreifen nach einem der vorhergehenden Ansprüche, **dadurch gekennzeichnet, dass** er ferner Auswurfmittel (18, 19) umfasst, die dazu ausgelegt sind, den Rohreifen (20) aus der Maschine zu entfernen.

11. Handhabungskopf für Rohreifen nach Anspruch 8, **dadurch gekennzeichnet, dass** die Auswurfmittel (18, 19) einen klappbaren Auswurfarm (18) umfassen, der mit einer Auswurfrolle (19) verbunden ist.

12. Handhabungskopf für Rohreifen nach einem der Ansprüche 1 bis 11, **dadurch gekennzeichnet, dass** die Befestigungsmittel (3, 4, 5, 6, 7, 8, 9, 10, 11, 12, 21, 22, 23, 24), die dazu ausgelegt sind, einen Rohreifen (20) in einer im Wesentlichen horizontalen Position und in einer im Wesentlichen vertikalen Position zu befestigen, ferner mindestens eine Stützplatte (21) umfassen, die dazu ausgelegt ist, als Stütze für die Flanke (25) des Rohreifens (20) zu dienen.

13. Handhabungskopf für Rohreifen nach Anspruch 2 und 12, **dadurch gekennzeichnet, dass** die mindestens eine Stützplatte (21) einen ersten Bereich (23) senkrecht zu einer Welle der Befestigungsrolle (5) zum Befestigen des Rohreifens (20), gefolgt von einem zweiten schrägen Bereich (24), der dazu ausgelegt ist, die Flanke (25) des Rohreifens (20) zu stützen, umfasst.

14. Handhabungskopf für Rohreifen nach Anspruch 13, **dadurch gekennzeichnet, dass** er ferner Aktuatoren (26) umfasst, die dazu ausgelegt sind, die Platten (21) aus einer ersten Position, in der der zweite Bereich (24) parallel zur Welle der Rolle (5) steht, in eine zweite Position zu bewegen, in der der zweite Bereich (24) zum Stützen des Rohreifens (20) auf der Platte (21) einen bestimmten Winkel bildet.

15. Handhabungsmaschine für Rohreifen, die Folgendes umfasst:
• ein Untergestell;
• mindestens einen Arm eines Roboters (1), der zum Verbinden des Arms des Roboters (1) mit dem Untergestell ein erstes Verbindungsende (2) umfasst;
• den Handhabungskopf für Rohreifen nach einem der vorhergehenden Ansprüche.

16. Handhabungsmaschine für Rohreifen nach Anspruch 14, **dadurch gekennzeichnet, dass** der mindestens eine Arm eines Roboters (1) zum Verbinden des Handhabungskopfs gegenüber dem ersten Verbindungsende (2) ein zweites Verbindungsende (15) umfasst.

## Revendications

1. Tête de manutention pour pneus crus comprenant :
• des moyens de fixation (3, 4, 5, 6, 7, 8, 9, 10, 11, 12, 21, 22, 23, 24) configurés pour fixer un pneu cru (20) dans une position essentiellement horizontale et dans une position essentiellement verticale et **caractérisée en ce que** lesdits moyens de fixation sont également configurés pour manipuler le pneu cru d'une position horizontale jusqu'à une position verticale.

2. Tête de manutention de pneus crus selon la revendication 1 **caractérisée en ce que** les moyens de fixation (3, 4, 5, 6, 7, 8, 9, 10, 11, 12, 21, 22, 23, 24) configurés pour fixer un pneu cru (20) dans une position essentiellement horizontale et dans une position essentiellement verticale comprennent un support principal (3) et au moins un support secondaire (4) lié de manière rotative au support principal (3), dans lequel le au moins un support secondaire (4) comprend au moins un rouleau de fixation (5) pour fixer le pneu cru (20).

3. Tête de manutention de pneus crus selon la revendication 2 **caractérisée en ce que** les moyens de fixation (3, 4, 5, 6, 7, 8, 9, 10, 11, 12, 21, 22, 23, 24) configurés pour fixer un pneu cru (20) dans une position essentiellement horizontale et dans une position essentiellement verticale comprennent un support principal (3) et deux supports secondaires (4) liés de manière rotative au support principal (3), dans lequel les supports secondaires (4) comprennent des rouleaux de fixation (5) pour fixer le pneu cru (20).

4. Tête de manutention de pneus crus selon la revendication 3 **caractérisée en ce que** les supports secondaires (4) sont liés de manière rotative au support principal (3), de préférence par le biais d'au moins un premier actionneur (6).

5. Tête de manutention de pneus crus selon la revendication 4 **caractérisée en ce que** les moyens de fixation (3, 4, 5, 6, 7, 8, 9, 10, 11, 12, 21, 22, 23, 24) comprennent des supports tertiaires (8) raccordés, de préférence sans possibilité de rotation, aux supports secondaires (4) et une tige de raccordement (7) des supports tertiaires (8), configurant ainsi un quadrilatère articulé qui lie le mouvement des deux supports secondaires (4).

6. Tête de manutention de pneus crus selon l'une quelconque des revendications 2 à 5, **caractérisée en ce que** les supports secondaires (4) comprennent une première extrémité de raccordement (9) pour se raccorder au support principal (8) et une seconde extrémité de raccordement (10) au niveau de laquelle les rouleaux de fixation (5) pour la fixation du pneu cru (20) sont raccordés.

7. Tête de manutention de pneus crus selon l'une quelconque des revendications 2 à 5 **caractérisée en ce que** les supports secondaires (4) sont en forme de L, dans laquelle au niveau de chacune des extrémités libres du L il y a un rouleau de fixation (5) fixé pour fixer le pneu cru (20) et dans laquelle chaque support secondaire (4) est raccordé au support principal (3) au niveau de l'intersection des deux ramifications du L.

8. Tête de manutention de pneus crus selon l'une quelconque des revendications précédentes **caractérisée en ce que** les moyens de fixation (3, 4, 5, 6, 7, 8, 9, 10, 11, 12, 21, 22, 23, 24) configurés pour fixer un pneu cru (20) dans une position essentiellement horizontale et dans une position essentiellement verticale sont au moins partiellement repliables.

9. Tête de manutention de pneus crus selon la revendication 8 **caractérisée en ce que** les moyens de fixation (3, 4, 5, 6, 7, 8, 9, 10, 11, 12, 21, 22, 23, 24) comprennent un support repliable (11) qui est repliable, de préférence par le biais d'un second actionneur (12), d'une position ouverte jusqu'à une position fermée, dans la position essentiellement horizontale, et de la position fermée jusqu'à la position ouverte, dans la position essentiellement verticale.

10. Tête de manutention pour pneus crus selon l'une quelconque des revendications précédentes, **caractérisée en ce qu'**elle comprend en outre des moyens d'éjection (18, 19) configurés pour retirer le pneu cru (20) de la machine.

11. Tête de manutention de pneus crus selon la revendication 8 **caractérisée en ce que** les moyens d'éjection (18, 19) comprennent un bras d'éjection repliable (18) raccordé à un rouleau d'éjection (19).

12. Tête de manutention de pneus crus selon l'une quelconque des revendications 1 à 11, **caractérisée en ce que** les moyens de fixation (3, 4, 5, 6, 7, 8, 9, 10, 11, 12, 21, 22, 23, 24) configurés pour fixer un pneu cru (20) dans une position essentiellement horizontale et dans une position essentiellement verticale comprennent en outre au moins une plaque de support (21) configurée pour servir de support pour le flanc (25) du pneu cru (20).

13. Tête de manutention de pneus crus selon les revendications 2 et 12 **caractérisée en ce que** la au moins une plaque support (21) comprend une première section (23) perpendiculaire à un arbre du rouleau de fixation (5) pour la fixation du pneu cru (20) suivie d'une seconde section oblique (24) configurée pour supporter le flanc (25) du pneu cru (20).

14. Tête de manutention de pneus crus selon la revendication 13, **caractérisée en ce qu'**elle comprend en outre des actionneurs (26) configurés pour déplacer les plaques (21) d'une première position dans laquelle la seconde section (24) est parallèle à l'arbre du rouleau (5), jusqu'à une seconde position dans laquelle la seconde section (24) forme un certain angle pour supporter le pneu cru (20) sur la plaque (21).

15. Machine de manutention pour pneus crus comprenant :
• un châssis ;
• au moins un bras d'un robot (1) comprenant une première extrémité de raccordement (2) pour raccorder le bras du robot (1) au châssis ;
• la tête de manutention pour pneus crus selon l'une quelconque des revendications précédentes.

16. Machine de manutention de pneus crus selon la revendication 14, **caractérisée en ce que** le au moins un bras d'un robot (1) comprend une seconde extrémité de raccordement (15) pour se raccorder à la tête de manutention opposée à la première extrémité de raccordement (2).
